# FASCICULE DE BREVET EUROPEEN

(11) **EP 1 315 874 B1**
(45) Date de publication et mention de la délivrance du brevet: **30.11.2005**
(21) Numéro de dépôt: 01967459.7
(22) Date de dépôt: 07.09.2001
(51) Int. Cl.: E05B 49/00, B60R 25/00

(54) **PROCEDE ET DISPOSITIF DE VERROUILLAGE AUTOMATIQUE D'UN VEHICULE AUTOMOBILE**
VERFAHREN UND VORRICHTUNG ZUM AUTOMATISCHEN VERSCHLIESSEN EINES AUTOMOBILS
METHOD AND DEVICE FOR AUTOMATICALLY LOCKING A MOTOR VEHICLE

(30) Priorité: 08.09.2000 FR 0011484; 08.11.2000 FR 0014344; 06.07.2001 FR 0109040
(43) Date de publication de la demande: 04.06.2003
(73) Titulaire: Peugeot Citroen Automobiles SA, 92200 Neuilly sur Seine (FR)
(72) Inventeur: CHANDEBOIS, Michael, F-91470 Forges les Bains (FR)
(74) Mandataire: Bouget, Lucien
(86) Numéro de dépôt international: PCT/FR2001/002792
(87) Numéro de publication internationale: WO 2002/020923

(56) Documents cités:
- EP-A- 0 735 219
- EP-A- 0 984 123
- DE-A- 19 827 586
- DE-A- 19 851 058
- FR-A- 2 700 625
- US-A- 4 672 375

## Description

L'invention concerne un procédé et un dispositif de verrouillage automatique d'un véhicule automobile et en particulier de condamnation automatique des portes, lorsqu'un occupant, et en particulier le conducteur, quitte le véhicule automobile.

On connaît des véhicules automobiles qui comportent un système d'accès et de démarrage sans intervention manuelle, appelé accès et démarrage mains libres (ADML), un tel système permettant le déverrouillage des portières et/ou d'autres dispositifs de sécurité antivol du véhicule automobile, sans intervention manuelle de l'utilisateur.

Pour cela, l'utilisateur est muni d'un moyen de reconnaissance, ou "identifiant", qui permet à une unité de commande du déverrouillage du véhicule automobile de reconnaître l'utilisateur autorisé, lorsque l'utilisateur est à proximité d'une porte du véhicule automobile et, généralement, lorsque l'utilisateur actionne la poignée d'ouverture ou plus généralement tout dispositif de commande d'ouverture extérieure de la porte.

L'identifiant peut être constitué par exemple par une carte électronique ou un émetteur fournissant un code d'identification qui doit être reconnu par l'unité de commande de déverrouillage du véhicule automobile pour permettre la manoeuvre de déverrouillage.

Actuellement, les véhicules comportant un système d'accès et de démarrage mains libres nécessitent une action de l'utilisateur, lorsque celui-ci quitte le véhicule automobile, pour que le verrouillage du véhicule, et par exemple le verrouillage des portes, soit réalisé. Généralement, pour activer le ou les moyens de verrouillage, l'utilisateur actionne un bouton poussoir situé sur la commande d'ouverture extérieure de la porte.

Il existe à l'heure actuelle une demande des utilisateurs de véhicules possédant la fonction ADML, pour que non seulement le déverrouillage mais encore le verrouillage du véhicule automobile puisse être réalisé, avec une grande sûreté de fonctionnement, de manière totalement automatique sans intervention manuelle, lorsque l'utilisateur quitte son véhicule automobile.

Un verrouillage automatique du véhicule nécessite que certaines précautions soient prises pour éviter un verrouillage intempestif, avant que le conducteur ne soit descendu et se soit éloigné de son véhicule ou encore, lorsque des passagers sont restés à l'intérieur du véhicule automobile.

Il est nécessaire également que le dispositif de verrouillage soit commandé à partir d'informations totalement fiables concernant la présence ou l'absence d'un identifiant à proximité du véhicule automobile.

Pour concevoir un dispositif de verrouillage automatique prenant en compte tous les cas possibles et ne réalisant le verrouillage qu'à bon escient, il est nécessaire d'effectuer un grand nombre de vérifications qui peuvent nécessiter une implantation particulière de détecteurs à l'intérieur ou à l'extérieur du véhicule automobile.

A priori, un système de verrouillage répondant à toutes les exigences requises est donc un dispositif complexe et coûteux.

Les véhicules munis d'un système ADML comportent généralement des moyens de détection de la présence ou de l'absence d'un utilisateur muni d'un identifiant dans une zone définie, généralement à l'extérieur du véhicule automobile au voisinage d'une porte, ces moyens de détection comportant généralement une ou plusieurs antennes extérieures.

Les véhicules automobiles comportent également, de manière habituelle, des moyens de détection de l'état d'ouverture ou de fermeture des portes utilisés comme dispositif de sécurité pour signaler cet état d'ouverture et de fermeture sur un moyen d'affichage du tableau de bord ou pour interdire le démarrage du véhicule automobile de manière automatique dans le cas où une portière est restée ouverte.

Les véhicules automobiles comportent également des moyens permettant de détecter si le moteur du véhicule est à l'arrêt ou en fonctionnement.

Ces moyens n'ont jamais été utilisés pour réaliser un verrouillage automatique d'un véhicule automobile muni d'un système ADML, d'une manière totalement sûre. A ce sujet, il est fait référence au document EP-A-0735219.

Le but de l'invention est donc de proposer un procédé de verrouillage automatique d'un véhicule automobile comportant un système d'accès et de démarrage sans intervention manuelle comprenant des premiers moyens de détection de la présence ou de l'absence d'un identifiant dans au moins une zone de surveillance extérieure au véhicule à proximité d'une porte, ainsi que des seconds moyens de détection de l'état d'ouverture ou de fermeture des portes et des troisièmes moyens de détection de l'état de marche ou d'arrêt du moteur du véhicule automobile, ce procédé permettant de réaliser le verrouillage automatique du véhicule, uniquement à bon escient, sans mettre en oeuvre de moyens de détection en plus des moyens dont est déjà pourvu le véhicule.

Dans ce but, on commande automatiquement le verrouillage du véhicule, dans le cas où l'on détecte successivement les états suivants :
- ouverture d'une porte,
- arrêt du moteur et fermeture de toutes les portes du véhicule automobile,
- absence de l'identifiant dans la zone de surveillance extérieure au véhicule automobile à un instant t,
- présence de l'identifiant dans la zone de surveillance à un instant t-1 précédant l'instant t auquel on a détecté l'absence de l'identifiant.

Dans certains cas, lorsque le véhicule automobile est muni d'un système de détection volumétrique de la présence de personnes dans l'habitacle du véhicule, on soumet la commande de verrouillage automatique du véhicule automobile à une condition supplémentaire de non présence d'un passager dans l'habitacle du véhicule automobile.

Dans un mode de réalisation préférentiel de l'invention, on détecte la présence de l'identifiant dans la zone de surveillance, en émettant une onde basse fréquence dans au moins une zone de couverture à la périphérie du véhicule automobile, à partir d'au moins un premier moyen d'émission et de réception lié au véhicule automobile, de manière que l'onde basse fréquence soit reçue par l'identifiant réalisé sous la forme d'un second moyen d'émission et de réception et qu'une onde en retour soit envoyée par l'identifiant au premier moyen d'émission et de réception lié au véhicule automobile.

De préférence, l'onde en retour envoyée par l'identifiant au premier moyen d'émission et de réception lié au véhicule automobile est une onde à haute fréquence.

L'invention est également relative à un dispositif de verrouillage automatique permettant de mettre en oeuvre le procédé de l'invention.

Afin de bien faire comprendre l'invention, on va maintenant décrire, à titre d'exemple en se référant à la figure jointe en annexe, un mode de mise en oeuvre du procédé de l'invention sur un véhicule automobile muni d'un système ADML.
La figure 1 est un schéma fonctionnel montrant le déroulement des contrôles et vérifications pouvant conduire à la condamnation des portes d'un véhicule automobile de manière automatique.
La figure 2 est une vue de dessus d'un véhicule automobile équipé d'une antenne émettrice et réceptrice à haute fréquence.
La figure 3 est une vue de dessus d'un véhicule automobile équipé d'une pluralité d'antennes émettrices à basse fréquence suivant un premier mode de réalisation.
Les figures 4 et 5 sont des vues de dessus d'un véhicule automobile équipé d'une pluralité d'antennes émettrices à basse fréquence, suivant un second mode de réalisation.

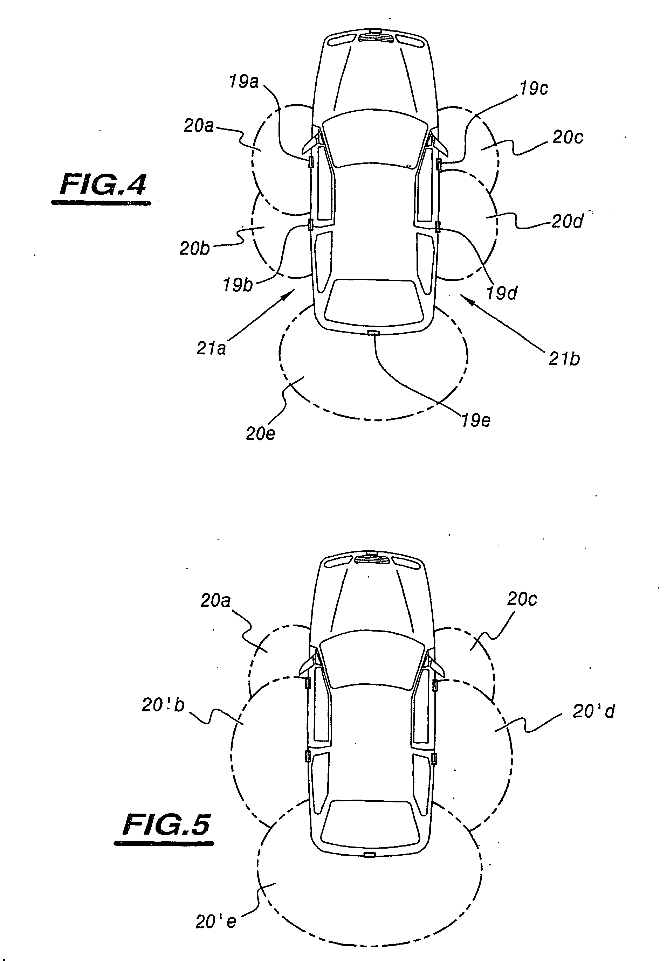

La figure 4 montre les zones de couverture des antennes pilotées à une puissance d'émission nominale.
La figure 5 montre les zones de couverture des antennes pilotées à une puissance d'émission supérieure à la puissance nominale.

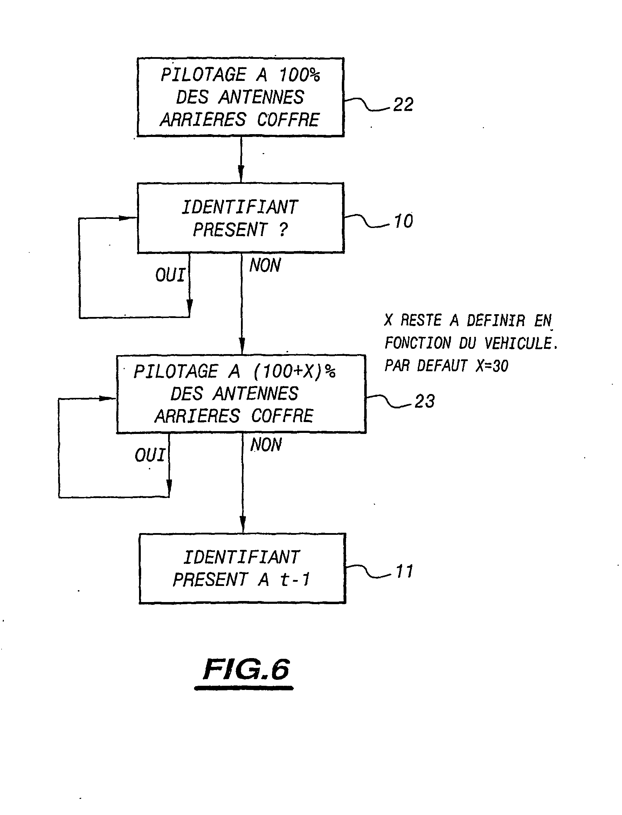

La figure 6 est un schéma fonctionnel partiel relatif à l'utilisation des antennes selon le second mode de réalisation.

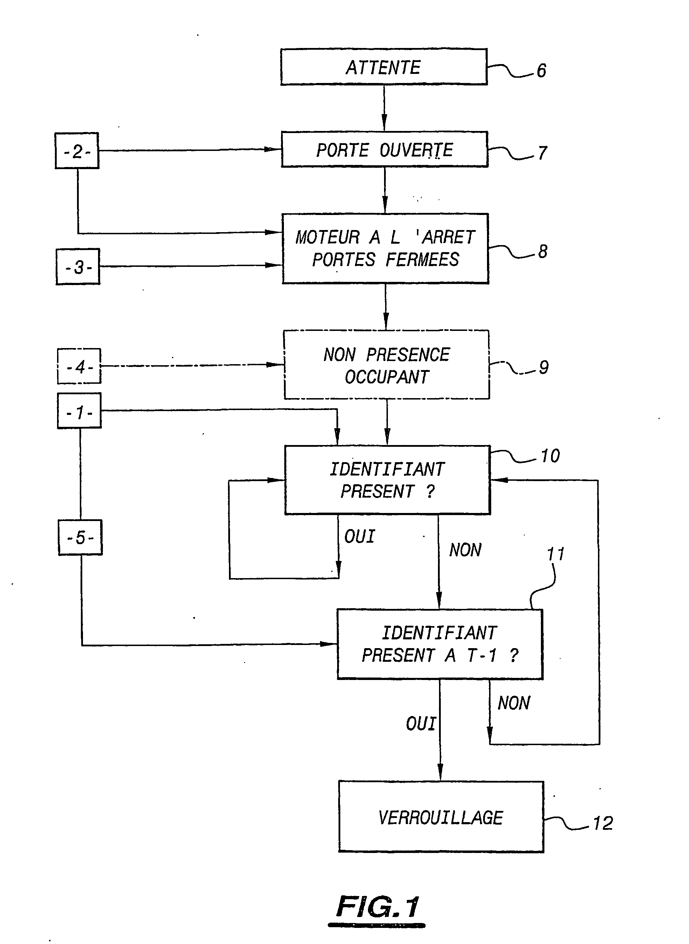

Sur la figure 1, on a représenté, dans la partie de gauche, les moyens de détection et de traitement permettant d'effectuer les différentes étapes fonctionnelles indiquées par des blocs.

Les moyens de détection figurés sur la gauche du schéma comportent dés premiers moyens 1 de détection de la présence ou de l'absence d'un identifiant dans une zone extérieure au véhicule automobile. Les premiers moyens de détection comportent par exemple des antennes extérieures au véhicule permettant de couvrir une zone située au voisinage d'une porte du véhicule et par exemple au voisinage de la porte du conducteur. L'identifiant dont on contrôle la présence ou la non présence dans la zone de surveillance peut être par exemple une carte électronique ou optique portant un code dont on effectue la lecture ou un émetteur dont l'émission est captée par les moyens 1 qui sont reliés au système de déverrouillage automatique des portes du véhicule automobile.

Il existe un grand nombre de technologies pour vérifier la présence d'un identifiant dans une zone de surveillance.

De manière générale, au moins un émetteur-récepteur lié au véhicule automobile, par exemple une antenne émettrice-réceptrice fixée sur le véhicule automobile permet d'émettre une onde en radio-fréquence dans une zone de couverture entourant le véhicule automobile. Lorsque l'identifiant est dans la zone de couverture, il capte l'onde, grâce à un récepteur intégré et émet, en réponse, une onde en radio-fréquence en direction de l'émetteur-récepteur lié au véhicule automobile, de manière que l'émetteur-récepteur soit informé de la présence de l'identifiant dans la zone de couverture de l'antenne.

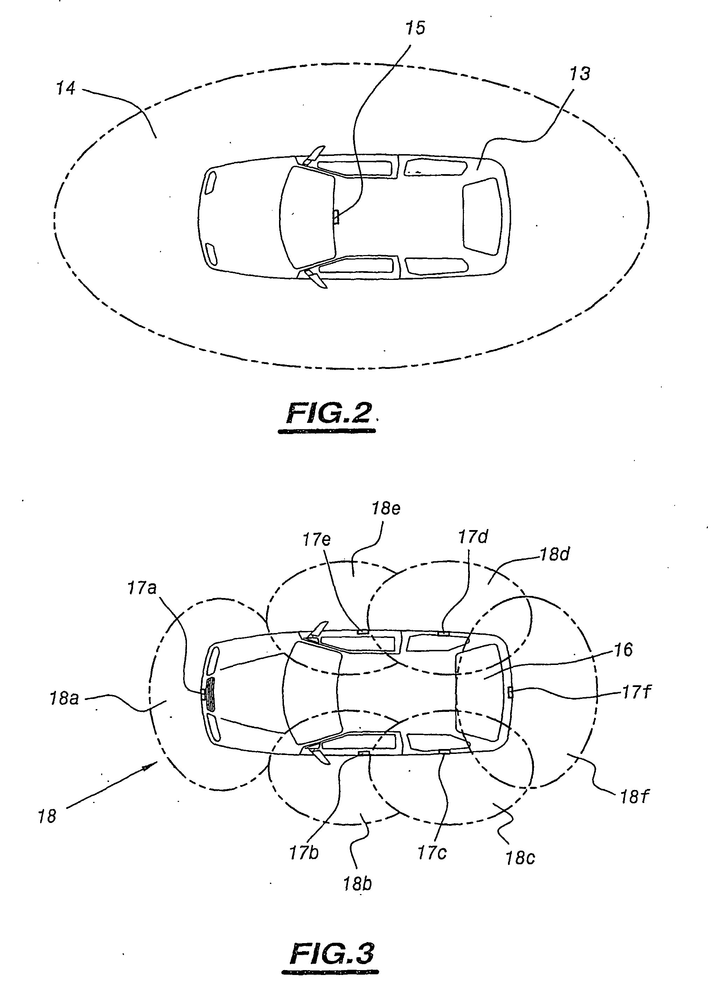

Lorsqu'on émet, depuis l'émetteur-récepteur 15 lié au véhicule automobile 13, une onde en haute fréquence, la zone de couverture 14 d'une seule antenne 15 fixée sur le véhicule automobile 13 peut s'étendre tout autour du véhicule automobile 13, comme il est visible sur la figure 2. Cependant, l'étendue de la zone de couverture 14 et la forme et la disposition du contour délimitant la zone de couverture à la périphérie du véhicule automobile sont soumis à des variations et sont peu prévisibles.

L'utilisation de hautes fréquences ne permet pas de maîtriser, de manière satisfaisante, le diagramme de rayonnement de l'antenne. La détection de la présence de l'identifiant dans une zone entourant le véhicule automobile est donc très incertaine et couvre un périmètre important relativement éloigné du véhicule.

Dans le cas de la mise en oeuvre du procédé suivant l'invention, on réalise donc de préférence l'émission d'ondes à basse fréquence, à partir d'au moins un émetteur tel qu'une antenne émettrice fixée sur le véhicule automobile. L'utilisation d'ondes à basses fréquences permet de maîtriser le diagramme de rayonnement de l'émetteur de manière satisfaisante et donc de définir au moins une zone de couverture précise quant à son étendue et à sa position à la périphérie du véhicule automobile. Cependant, la zone de couverture d'un émetteur à basse fréquence est sensiblement moins étendue que la zone de couverture d'un émetteur à haute fréquence et il peut être nécessaire, pour obtenir une zone de surveillance s'étendant tout autour du véhicule automobile, d'utiliser plusieurs émetteurs basse fréquence.

Sur la figure 3, on a représenté un véhicule automobile dont la zone de surveillance 18 est constituée de six zones de couvertures 18a, 18b, 18c, 18d, 18e et 18f de six antennes basses fréquences respectives 17a, 17b, 17c, 17d, 17e et 17f fixées sur le véhicule automobile de manière que les zones de couverture s'étendant suivant la périphérie du véhicule automobile 16 entourent complètement le véhicule automobile.

Les antennes sont placées de manière à n'être pas apparentes. Par exemple, les antennes disposées sur les côtés latéraux du véhicule automobile peuvent être intégrées aux poignées des portes ; des antennes dirigées vers l'arrière, ou vers l'avant du véhicule automobile peuvent être intégrées au pare-chocs arrière ou au pare-chocs avant.

Cependant, pour obtenir une rapidité de réponse suffisante du système, les antennes émettrices basse fréquence sont équipées de récepteurs haute fréquence, de manière que l'identifiant puisse envoyer en retour aux antennes une onde haute fréquence, lorsqu'il reçoit une onde basse fréquence émise par une antenne.

De manière avantageuse, les émetteurs basse fréquence fixés sur le véhicule automobile sont commandés de manière à émettre des ondes d'une fréquence voisine de 125 kHz et suivant les pays dans lesquels sont utilisés les véhicules automobiles, les fréquences de réponse des antennes (et donc les fréquences d'émission des identifiants) peuvent être par exemple 315, 433 ou 866 MHz.

Les moyens de détection du système de verrouillage du véhicule automobile comportent de plus des seconds moyens de détection 2 constitués par des détecteurs de l'état d'ouverture et de fermeture de chacune des portes du véhicule et des troisièmes moyens de détection 3 de l'état de marche ou d'arrêt du moteur du véhicule automobile ainsi qu'éventuellement des quatrièmes moyens 4 constitués par au moins un capteur de détection volumétrique de la présence ou de l'absence de passagers à l'intérieur du véhicule automobile.

Il est à remarquer que les moyens de détection utilisés dans le système automatique de verrouillage du véhicule automobile qui sont représentés sur la figure peuvent être des moyens dont sont équipés habituellement les véhicules automobiles pourvus d'un système ADML.

Les premiers moyens 1 de détection d'un identifiant sont reliés à une mémoire 5 assurant le stockage d'informations concernant la présence ou la non présence de l'identifiant dans la zone de surveillance à des instants successifs t-1, t, t+1, ..., l'unité de temps utilisée pouvant être par exemple la seconde.

La signification des blocs fonctionnels qui correspondent soit à un état constaté soit à une interrogation sera donnée ci-après :
- le bloc 6 correspond à la position d'attente du système de verrouillage automatique.
- le bloc 7 correspond à l'état d'ouverture d'une porte du véhicule automobile ; l'information correspondante est fournie par le détecteur 2.
- le bloc 8 correspond à un état du véhicule avec son moteur à l'arrêt et toutes ses portes fermées ; l'état correspondant est déterminé par les moyens de détection 2 et 3.
- le bloc 9, qui est un élément optionnel dans la suite du déroulement du procédé suivant l'invention, correspond à un état de l'habitacle du véhicule automobile dans lequel on n'a détecté la présence d'aucun occupant ; l'information correspondante est fournie par le système de détection 4 de type périmétrique situé dans l'habitacle du véhicule, l'étape 9 du procédé étant effectuée uniquement dans le cas où le véhicule possède un tel dispositif de détection à l'intérieur de l'habitacle, par exemple utilisé pour déclencher une alarme,
- le bloc 10 correspond à la question : l'identifiant est-il présent dans la zone de surveillance à l'extérieur du véhicule à un instant t ?
- le bloc 11 correspond à la question : l'identifiant était-il présent dans la zone de surveillance extérieure au véhicule à l'instant t-1 ?
- la référence 12 désigne l'unité de commande de verrouillage du véhicule automobile qui peut être en particulier une unité de commande du verrouillage des portes.

Le schéma fonctionnel du procédé représenté sur la figure sera décrit ci-dessous.

A partir d'un état d'attente du système de verrouillage schématisé par le bloc 6, on passe à l'état représenté par le bloc 7, lorsqu'un occupant du véhicule automobile ouvre une porte. L'état représenté par le bloc 8, c'est-à-dire l'arrêt du moteur et les portes du véhicule toutes fermées, correspond par exemple au cas où le conducteur du véhicule automobile a coupé le moteur pour sortir du véhicule dont il a refermé la porte.

On effectue alors éventuellement l'étape 9 correspondant à la vérification de la non présence d'un occupant dans l'habitacle du véhicule automobile, cette vérification étant faite par l'alarme périphérique du véhicule lorsqu'il est équipé d'une telle alarme.

Cette étape optionnelle déclenchée par le détecteur 4 peut être utile pour éviter un verrouillage des portes du véhicule, lorsque le conducteur est descendu et qu'il reste des occupants dans le véhicule automobile. Toutefois, cette étape n'est pas indispensable et il est possible de passer directement de l'étape 8 constatant l'état à moteur arrêté et portes fermées du véhicule automobile, à l'étape 10 correspondant à l'interrogation : l'identifiant est-il présent à cet instant dans la zone de surveillance extérieure au véhicule automobile ? La réponse à cette question est donnée par les premiers moyens de détection 1 constitués par exemple par des antennes extérieures du véhicule, l'identifiant étant un émetteur permettant de reconnaître l'utilisateur autorisé du véhicule automobile.

Si l'identifiant est présent dans la zone de surveillance, dans le cas où cette zone est constituée par un ensemble de zones de couverture d'antennes émettant à basse fréquence, comme représenté sur la figure 3, l'identifiant reçoit une onde basse fréquence et émet en réponse, en direction du récepteur haute fréquence d'une antenne, une onde haute fréquence. La réception de l'onde haute fréquence en retour permet de déterminer la présence de l'identifiant dans la zone de surveillance.

Dans le cas où l'identifiant est présent dans la zone de surveillance à l'extérieur du véhicule, on revient à l'étape 10, pour poser à nouveau la question à un instant suivant la première interrogation, comme représenté par la flèche indiquée OUI.

Ce cas correspond par exemple au cas où le conducteur qui est descendu du véhicule automobile, a arrêté son moteur et fermé la porte de sortie mais se trouve encore dans la zone de surveillance extérieure au véhicule automobile. Dans ce cas, on ne réalise pas le verrouillage, le conducteur pouvant remonter immédiatement dans son véhicule pour redémarrer.

Dans le cas où la réponse est non, c'est-à-dire dans le cas où l'utilisateur muni de l'identifiant n'est pas détecté dans la zone de surveillance à l'extérieur du véhicule automobile, on passe à l'étape 11 correspondant à l'interrogation : l'identifiant était-il présent dans la zone de surveillance à un instant t-1 précédant l'instant où l'on a constaté son absence dans la zone de surveillance ?

Dans le cas où la réponse est non, c'est-à-dire dans le cas où l'utilisateur du véhicule muni de l'identifiant ne se trouvait pas dans la zone de surveillance à l'instant précédent, on revient à l'étape 10. Ce cas correspond au cas d'un utilisateur qui est resté à l'intérieur du véhicule automobile, moteur arrêté, après avoir ouvert puis refermé une porte du véhicule automobile. Dans ce cas, on n'effectue pas le verrouillage des portes et on repose à nouveau la question concernant la présence de l'identifiant dans la zone de surveillance.

Lorsque l'identifiant est absent de la zone de surveillance à l'instant t mais qu' il était présent dans cette zone à l'instant t-1, l'unité 12 de commande du verrouillage des portes de véhicule automobile est activée. Cette situation correspond au cas d'un occupant qui est sorti du véhicule automobile, moteur arrêté, a refermé les portes et s'est éloigné du véhicule, en quittant la zone de surveillance. Dans ce cas, on doit assurer le verrouillage des portes du véhicule automobile.

La présence ou l'absence de l'identifiant dans la zone de surveillance à l'instant t-1 est déterminée par la mémoire 5 reliée aux premiers moyens de détection 1.

Dans certains cas et en particulier lorsqu'on utilise des antennes émettrices à basse fréquence, pour augmenter la précision et la sûreté de détection, la zone de surveillance de l'identifiant constituée par les zones juxtaposées d'émission des antennes n'entoure pas l'ensemble du véhicule.

En effet, pour obtenir une meilleure définition des zones d'émission des antennes, on peut prévoir que ces zones ne se recouvrent pas.

Un tel cas a été représenté sur la figure 4. Le véhicule automobile comporte cinq antennes 19a, 19b, 19c, 19d, 19e émettrices réparties à la périphérie du véhicule et, par exemple, disposées dans les portières et sur le coffre arrière du véhicule automobile, émettant dans cinq zones de couverture respectives 20a, 20b, 20c, 20d, 20e. Les zones de couverture des antennes situées vers l'arrière du véhicule 20b, 20d et 20e ne se recouvrent pas lorsque les antennes émettent à leur puissance nominale. Il existe donc deux zones 21a et 21b situées vers l'arrière du véhicule, respectivement entre les zones de couverture 20b et 20e et 20d et 20e, dans lesquelles la couverture par les ondes n'est pas assurée.

Dans ce cas, lorsque l'utilisateur du véhicule sort de l'habitacle et se dirige vers l'arrière du véhicule, par exemple vers la trappe à carburant pour faire le plein de carburant ou pour accéder au coffre arrière, il échappe momentanément au contrôle des antennes, lorsqu'il traverse l'une des zones 21a et 21b.

A l'étape 10 du procédé (tel que représenté sur le schéma de la figure 1), la réponse devient NON et un verrouillage du véhicule est déclenché, l'identifiant étant présent dans la zone de surveillance à l'instant t-1. Ce verrouillage est inopiné dans la mesure où il concerne également la trappe à carburant. Un verrouillage n'est pas non plus nécessaire dans la mesure où l'utilisateur reste près du véhicule et ne désire pas s'éloigner.

Il est donc souhaitable d'éviter de verrouiller le véhicule, lorsque l'utilisateur muni de l'identifiant se dirige vers l'arrière du véhicule automobile.

Comme représenté sur la figure 5, un pilotage des antennes émettrices 19b, 19d et 19e à une puissance supérieure à la puissance nominale d'émission (pilotage à 100 % + X %) permet d'étendre les zones de couverture 20b, 20d et 20e, de manière que ces zones étendues 20'b, 20'd et 20'e se recouvrent et qu'il n'existe plus de zone de non-surveillance telles que les zones 21a et 21b (figure 5). Le verrouillage du véhicule n'est plus réalisé lorsque l'utilisateur du véhicule se déplace jusqu'à l'arrière, par exemple pour atteindre la trappe de carburant, du fait que, dans l'étape 10 du procédé de contrôle, l'identifiant reste présent.

La condamnation automatique du véhicule n'est effectuée que lorsque l'utilisateur s'éloigne du véhicule, de manière à se trouver en dehors de l'ensemble des zones de couverture.

Sur la figure 6, on a représenté, sous la forme d'un schéma fonctionnel, les étapes supplémentaires 22 et 23 qui sont réalisées préalablement à l'étape 10 et entre l'étape 10 et l'étape 11 du procédé tel que décrit plus haut en regard de la figure 1.

L'étape 22 est une étape de pilotage des antennes fixées à l'arrière du véhicule (par exemple les antennes 19b, 19d et 19e fixées respectivement sur les portières arrière et le coffre du véhicule) à leur puissance d'émission nominale (ou pilotage à 100 %). L'étape 23, qui est réalisée lorsque l'identifiant est absent de la zone de surveillance est une étape de réglage de la puissance d'émission des antennes arrière à un niveau supérieur à la puissance nominale (pilotage à 100 % + X %). X peut être compris entre 0 et 100 et, par exemple égal à 30.

De manière générale, on pilote au moins une partie des antennes émettrices du véhicule, et plus particulièrement les antennes arrière, à une puissance supérieure à la puissance nominale d'émission, lorsqu'on a détecté l'absence de l'identifiant dans la zone de surveillance, après un temps de présence.

Le procédé et le dispositif selon l'invention, qui viennent d'être décrits, permettent donc de réaliser un verrouillage totalement automatique des portes du véhicule automobile, en tenant compte de toutes les situations possibles de manière à n'effectuer le verrouillage qu'à bon escient.

D'autre part, le procédé et le dispositif suivant l'invention ne mettent en oeuvre que des moyens de détection dont est équipé un véhicule automobile moderne muni d'un système ADML. Toutefois, pour obtenir une très bonne définition de la zone de surveillance, il peut être nécessaire d'utiliser des émetteurs à basse.fréquence, alors que les systèmes habituels de déverrouillage ou de verrouillage automatique des véhicules automobiles comportent généralement des émetteurs-récepteurs à haute fréquence.

La conduite du procédé de verrouillage est assurée par l'unité 12 également présente sur le véhicule automobile, qui n'est actionnée que lorsque les différents états successifs nécessaires au verrouillage ont été vérifiés.

Ces vérifications peuvent être réalisées par des éléments logiques, électroniques reliés aux moyens de détection ou au moyen d'un simple câblage reliant l'unité de commande 12 aux moyens de détection.

Le procédé et le dispositif selon l'invention présentent donc une grande simplicité et sont peu coûteux du fait qu'ils ne nécessitent le montage d'aucun élément particulier.

Le verrouillage du véhicule automobile, par exemple la condamnation des portes, de la trappe à carburant, de la direction ou d'un système de démarrage du véhicule automobile peuvent être effectués de manière totalement automatique, si bien qu'il est possible de supprimer tout moyen de commande tel qu'un bouton poussoir associé à une commande d'ouverture extérieure d'une porte de véhicule automobile, par exemple une poignée.

L'invention ne se limite pas au mode de réalisation quj a été décrit.

Les différents états successifs nécessaires pour obtenir le verrouillage peuvent être vérifiés en utilisant tout type de moyens de détection. Dans certains cas, les moyens de détection peuvent être propres au système de verrouillage, bien que cette solution ne présente pas les mêmes avantages, quant au prix de revient, qu'un système utilisant uniquement les moyens prévus habituellement sur le véhicule automobile.

De manière générale, le moyen de détection de la présence d'un identifiant dans une zone de surveillance extérieure au véhicule peut être constitué par tout ensemble de détection tel que décrit plus haut comportant une pluralité d'antennes émettrices-réceptrices fixées sur le véhicule automobile de manière à émettre des ondes notamment à basse fréquence, dans une pluralité de zones de couverture respectives à la périphérie du véhicule automobile. Lorsque les antennes sont pilotées à leur puissance nominale d'émission, les zones de couverture de ces antennes peuvent, soit entourer complètement le véhicule automobile, soit laisser entre elles certaines zones non surveillées. Dans ce dernier cas, on peut prévoir un moyen de pilotage des antennes à un niveau de puissance supérieur à la puissance nominale qui peut être actionné, lorsque l'identifiant est absent de la zone de surveillance, après un temps de présence.

L'invention s'applique à tout type de véhicule automobile utilisé pour le transport de passagers ou de marchandises.

## Revendications

1. Procédé de verrouillage automatique d'un véhicule automobile comportant un système d'accès et de démarrage sans commande manuelle comportant un premier moyen de détection (1) de présence d'un identifiant dans une zone de surveillance extérieure au véhicule, ainsi que des seconds moyens de détection de l'état d'ouverture ou de fermeture des portes du véhicule automobile et des troisièmes moyens de détection de l'état de marche ou d'arrêt du moteur du véhicule automobile, **caractérisé par le fait qu'**on commande automatiquement le verrouillage du véhicule automobile, dans le cas où l'on détecte successivement les états suivants :
- ouverture d'une porte du véhicule automobile,
- arrêt du moteur et fermeture de toutes les portes du véhicule automobile,
- absence de l'identifiant dans la zone de surveillance extérieure au véhicule automobile à un instante t;
- présence de l'identifiant dans la zone de surveillance à un instant t-1 précédant l'instant t auquel on a détecté l'absence de l'identifiant.

2. Procédé suivant la revendication 1, **caractérisé par le fait qu'**on vérifie de plus, avant de contrôler la présence de l'identifiant dans la zone de surveillance, qu'aucun occupant n'est présent dans l'habitacle du véhicule automobile.

3. Procédé suivant l'une quelconque des revendications 1 et 2, **caractérisé par le fait qu'**on détecte la présence de l'identifiant dans la zone de surveillance (18), en émettant une onde basse fréquence dans au moins une zone de couverture (18a, 18b, 18c, 18d, 18e, 18f) à la périphérie du véhicule automobile, à partir d'au moins un premier moyen d'émission et de réception (17a, 17b, 17c, 17d, 17e, 17f) lié au véhicule automobile, de manière que l'onde basse fréquence soit reçue par l'identifiant réalisé sous la forme d'un second moyen d'émission et de réception et qu'une onde en retour soit envoyée par l'identifiant au premier moyen d'émission et de réception lié au véhicule automobile.

4. Procédé suivant la revendication 3, **caractérisé par le fait qu'**on détecte la présence de l'identifiant à partir d'antennes émettrices réparties à la périphérie du véhicule automobile et pilotées à une puissance nominale d'émission et que lorsqu'on détecte une absence de l'identifiant dans la zone de surveillance, on pilote au moins une partie des antennes (19b, 19d, 19e) du véhicule, par exemple situées à l'arrière du véhicule, à une puissance d'émission supérieure à la puissance nominale d'émission.

5. Procédé suivant la revendication 4, **caractérisé par le fait que**, lorsqu'on détecte une absence de l'identifiant dans la zone de surveillance, on pilote une partie au moins des antennes (19b, 19d, 19e) du véhicule, à une puissance d'émission de 100 % + X % de la puissance nominale, avec X compris entre 0 et 100 et de préférence égal à 30.

6. Procédé suivant l'une quelconque des revendications 3 à 5, **caractérisé par le fait que** l'onde basse fréquence émise à partir du premier moyen d'émission et de réception (17a, 17b, 17c, 17d, 17e, 17f) a une fréquence voisine de 125.kHz.

7. Procédé suivant l'une quelconque des revendications 3 à 6, **caractérisé par le fait que** l'onde en retour envoyée par l'identifiant au premier moyen d'émission et de réception (17a, 17b, 17c, 17d, 17e, 17f) lié au véhicule automobile est une onde à haute fréquence.

8. Procédé suivant la revendication 7, **caractérisé par le fait que** l'onde à haute fréquence envoyée par l'identifiant a l'une des fréquences suivantes: 315, 433, 866 MHz.

9. Dispositif de verrouillage automatique d'un véhicule automobile comportant un système d'accès et de démarrage sans intervention manuelle et comprenant des premiers moyens de détection (1) de la présence ou de l'absence d'un identifiant dans au moins une zone de surveillance extérieure au véhicule ainsi que des seconds moyens (2) de détection de l'état d'ouverture ou de fermeture des portes du véhicule automobile et des troisièmes moyens (3) de détection de l'état de marche ou d'arrêt du moteur du véhicule automobile, **caractérisé par le fait qu'**une unité de commande de verrouillage (12) du véhicule automobile est reliée électriquement ou par l'intermédiaire de moyens électroniques logiques au premier moyen de détection (1) de la présence ou de l'absence d'un identifiant dans la zone de surveillance extérieure au véhicule et à une unité (5) de mémorisation des informations du premier moyen de détection ainsi qu'aux seconds et aux troisièmes moyens de détection, pour commander automatiquement le verrouillage du véhicule automobile, dans le cas où l'on détecte successivement les états suivants :
- ouverture d'une porte du véhicule automobile,
- arrêt du moteur et fermeture de toutes les portes du véhicule automobile,
- absence de l'identifiant dans la zone de surveillance extérieure au véhicule automobile à un instant t;
- présence de l'identifiant dans la zone de surveillance à un instant t-1 précédant l'instant t auquel on a détecté l'absence de l'identifiant.

10. Dispositif de verrouillage suivant la revendication 9, **caractérisé par le fait qu'**il comporte de plus des quatrièmes moyens (4) de vérification de la présence ou de l'absence d'un occupant dans l'habitacle du véhicule automobile reliés fonctionnellement à l'unité (12) de commande de verrouillage du véhicule automobile, de manière à ne permettre l'actionnement du verrouillage automatique du véhicule automobile que dans le cas où les moyens de détection (4) ont permis de vérifier qu'aucun occupant ne se trouve à l'intérieur de l'habitacle du véhicule automobile.

11. Dispositif de verrouillage suivant l'une quelconque des revendications 9 et 10, **caractérisé par le fait que** les premiers moyens de détection (1) de la présence ou de l'absence d'un identifiant dans au moins une zone de surveillance extérieure au véhicule comportent au moins une antenne émettrice et réceptrice (17a, 17b, 17c, 17d, 17e, 17f) fixée sur le véhicule automobile et commandée de manière à émettre une onde à basse fréquence dans au moins une zone de couverture à la périphérie du véhicule automobile et à capter une onde en retour provenant de l'identifiant.

12. Dispositif de verrouillage suivant la revendication 11, **caractérisé par le fait que** l'antenne émettrice et réceptrice est commandée de manière à émettre une onde à basse fréquence, dont la fréquence est voisine de 125 kHz.

13. Dispositif de verrouillage suivant l'une quelconque des revendications 11 et 12, **caractérisé par le fait que** les premiers moyens de détection (1) comportent une pluralité d'antennes émettrices-réceptrices (17a, 17b, 17c, 17d, 17e, 17f) fixées sur le véhicule automobile (16) de manière à émettre des ondes notamment à basse fréquence dans une pluralité de zones de couverture respectives (18a, 18b, 18c, 18d, 18e, 18f) s'étendant à la périphérie du véhicule automobile (16).

14. Dispositif de verrouillage suivant la revendication 13, **caractérisé par le fait qu'**une partie au moins des antennes émettrices réceptrices (19a, 19b, 19c, 19d, 19e) fixées sur le véhicule automobile, et en particulier fixées à l'arrière du véhicule automobile, ont une puissance d'émission qui peut être pilotée à un niveau supérieur à un niveau de puissance nominale d'émission.

15. Dispositif suivant l'une quelconque des revendications 9 à 14, **caractérisé par le fait que** les premiers moyens de détection sont utilisés pour réaliser le déverrouillage du véhicule automobile de manière automatique, dans le cadre d'un système d'accès et de démarrage sans intervention manuelle, que les seconds moyens de détection constituent un élément d'un dispositif de sécurité du véhicule automobile et que les troisièmes moyens de détection constituent un élément de surveillance du véhicule automobile.

16. Dispositif de verrouillage automatique suivant la revendication 15 lorsque dépendante des revendications 10 à 14, **caractérisé par le fait que** les moyens de vérification de la non présence d'occupants dans l'habitacle du véhicule automobile constituent un élément d'une alarme périmétrique du véhicule automobile.

## Patentansprüche

1. Verfahren zum automatischen Verriegeln eines Kraftfahrzeugs, enthaltend ein Zugangs- und Anlass-System ohne manuelle Steuerung, das ein erstes Mittel zum Erfassen (1) der Anwesenheit einer Benutzeridentifizierung in einem Überwachungsbereich außerhalb des Fahrzeugs sowie zweite Mittel zum Erfassen des geöffneten oder geschlossenen Zustands der Türen des Kraftfahrzeugs und dritte Mittel zum Erfassen des Betriebs- oder Stillstand-Zustands des Motors des Kraftfahrzeugs aufweist, **dadurch gekennzeichnet, dass** das Verriegeln des Kraftfahrzeugs in dem Fall automatisch gesteuert wird, in dem nacheinander die folgenden Zustände erfasst werden:
- Öffnen einer Tür des Kraftfahrzeugs,
- Motorabschaltung und Schließen aller Türen des Kraftfahrzeugs,
- Abwesenheit der Benutzeridentifizierung in dem Überwachungsbereich außerhalb des Kraftfahrzeugs zu einem Zeitpunkt t,
- Anwesenheit der Benutzeridentifizierung in dem Überwachungsbereich zu einem Zeitpunkt t-1, der dem Zeitpunkt t vorausgeht, an dem die Abwesenheit der Benutzeridentifizierung erfasst worden ist.

2. Verfahren nach Anspruch 1, **dadurch gekennzeichnet, dass** vor dem Kontrollieren der Anwesenheit der Benutzeridentifizierung in dem Überwachungsbereich außerdem geprüft wird, dass sich kein Insasse in dem Fahrgastraum des Kraftfahrzeugs befindet.

3. Verfahren nach einem der Ansprüche 1 und 2, **dadurch gekennzeichnet, dass** die Anwesenheit der Benutzeridentifizierung in dem Überwachungsbereich (18) erfasst wird, indem eine niederfrequente Welle in wenigstens einem Deckungsbereich (18a, 18b, 18c, 18d, 18e, 18f) an dem Umfang des Kraftfahrzeugs ausgehend von wenigstens einem ersten, mit dem Kraftfahrzeug verbundenen Sende- und Empfangsmittel (17a, 17b, 17c, 17d, 17e, 17f) so ausgesendet wird, dass die niederfrequente Welle von der Benutzeridentifizierung empfangen wird, die in Form eines zweiten Sende- und Empfangsmittels ausgeführt ist, und dass durch die Benutzeridentifizierung eine Welle an das erste, mit dem Kraftfahrzeug verbundene Sende- und Empfangsmittel zurückgeschickt wird.

4. Verfahren nach Anspruch 3, **dadurch gekennzeichnet, dass** die Anwesenheit der Benutzeridentifizierung von Sendeantennen ausgehend erfasst wird, die an dem Umfang des Kraftfahrzeugs verteilt sind und mit einer Nennsendeleistung gesteuert werden, und dass dann, wenn eine Abwesenheit der Benutzeridentifizierung in dem Überwachungsbereich erfasst wird, wenigstens ein Teil der Antennen (19b, 19d, 19e) des Fahrzeugs, die sich beispielsweise an der Rückseite des Fahrzeugs befinden, mit einer höheren Sendeleistung als die Nennsendeleistung gesteuert wird.

5. Verfahren nach Anspruch 4, **dadurch gekennzeichnet, dass** dann, wenn eine Abwesenheit der Benutzeridentifizierung in dem Überwachungsbereich erfasst wird, wenigstens ein Teil der Antennen (19b, 19d, 19e) des Fahrzeugs mit einer Sendeleistung von 100% + X% der Nennleistung gesteuert wird, wobei X zwischen 0 und 100 liegt und vorzugsweise gleich 30 ist.

6. Verfahren nach einem der Ansprüche 3 bis 5, **dadurch gekennzeichnet, dass** die niederfrequente Welle, die ausgehend von dem ersten Sende- und Empfangsmittel (17a, 17b, 17c, 17d, 17e, 17f) gesendet wird, eine 125 kHz benachbarte Frequenz aufweist.

7. Verfahren nach einem der Ansprüche 3 bis 6, **dadurch gekennzeichnet, dass** die Welle, die von der Benutzeridentifizierung zu dem ersten, mit dem Kraftfahrzeug verbundenen Sende- und Empfangsmittel (17a, 17b, 17c, 17d, 17e, 17f) zurückgeschickt wird, eine hochfrequente Welle ist.

8. Verfahren nach Anspruch 7, **dadurch gekennzeichnet, dass** die hochfrequente Welle, die von der Benutzeridentifizierung geschickt wird, eine der folgenden Frequenzen aufweist: 315, 433, 866 MHz.

9. Vorrichtung zum automatischen Verriegeln eines Kraftfahrzeugs, enthaltend ein Zugangs- und Anlass-System ohne manuelles Eingreifen und enthaltend erste Mittel (1) zum Erfassen der Anwesenheit oder der Abwesenheit einer Benutzeridentifizierung wenigstens in einem Überwachungsbereich außerhalb des Fahrzeugs sowie zweite Mittel (2) zum Erfassen des geöffneten oder geschlossenen Zustands der Türen des Kraftfahrzeugs und dritte Mittel (3) zum Erfassen des Betriebs- oder Stillstand-Zustands des Motors des Kraftfahrzeugs, **dadurch gekennzeichnet, dass** eine verriegelungs-Steuereinheit (12) des Kraftfahrzeugs elektrisch oder mittels elektronischer logischer Mittel mit dem ersten Mittel (1) zum Erfassen der Anwesenheit oder der Abwesenheit einer Benutzeridentifizierung in dem Überwachungsbereich außerhalb des Fahrzeugs und mit einer Speichereinheit (5) für die Informationen des ersten Mittels zum Erfassen sowie mit den zweiten und den dritten Mitteln zum Erfassen verbunden ist, um die Verriegelung des Kraftfahrzeugs in dem Fall automatisch zu steuern, in dem nacheinander die folgenden Zustände erfasst werden:
- Öffnen einer Tür des Kraftfahrzeugs,
- Motorabschaltung und Schließen aller Türen des Kraftfahrzeugs,
- Abwesenheit der Benutzeridentifizierung in dem Überwachungsbereich außerhalb des Kraftfahrzeugs zu einem Zeitpunkt t,
- Anwesenheit der Benutzeridentifizierung in dem Überwachungsbereich zu einem Zeitpunkt t-1, der dem Zeitpunkt t vorausgeht, an dem die Abwesenheit der Benutzeridentifizierung erfasst worden ist.

10. Vorrichtung zum Verriegeln nach Anspruch 9, **dadurch gekennzeichnet, dass** sie außerdem vierte Mittel (4) zum Prüfen der Anwesenheit oder der Abwesenheit eines Insassen in dem Fahrgastraum des Kraftfahrzeugs aufweist, die funktionell so mit der Einheit (12) zum Steuern der Verriegelung des Kraftfahrzeugs verbunden sind, dass sie die Betätigung der automatischen Verriegelung des Kraftfahrzeugs nur in dem Fall gestatten, in dem die Erfassungsmittel (4) es ermöglicht haben, sicherzustellen, dass sich kein Insasse im Inneren des Fahrgastraums des Kraftfahrzeugs befindet.

11. Vorrichtung zum Verriegeln nach einem der Ansprüche 9 und 10, **dadurch gekennzeichnet, dass** die ersten Mittel (1) zum Erfassen der Anwesenheit oder der Abwesenheit einer Benutzeridentifizierung in wenigstens einem Überwachungsbereich außerhalb des Fahrzeugs wenigstens eine Sende- und Empfangsantenne (17a, 17b, 17c, 17d, 17e, 17f) enthalten, die auf dem Kraftfahrzeug befestigt ist und so gesteuert wird, dass sie eine niederfrequente Welle in wenigstens einen Deckungsbereich an dem Umfang des Kraftfahrzeugs aussendet und eine zurückkommende Welle empfängt, die von der Benutzeridentifizierung herstammt.

12. Vorrichtung zum Verriegeln nach Anspruch 11, **dadurch gekennzeichnet, dass** die Sende- und Empfangsantenne so gesteuert wird, dass sie eine niederfrequente Welle aussendet, deren Frequenz 125 kHz benachbart ist.

13. Vorrichtung zum Verriegeln nach einem der Ansprüche 11 und 12, **dadurch gekennzeichnet, dass** die ersten Erfassungsmittel (1) eine Vielzahl von Sende/Empfangsantennen (17a, 17b, 17c, 17d, 17e, 17f) aufweisen, die an dem Kraftfahrzeug (16) so befestigt sind, dass sie insbesondere niederfrequente Wellen in eine Vielzahl von entsprechenden Deckungsbereichen (18a, 18b, 18c, 18d, 18e, 18f) aussenden, die sich an dem Umfang des Kraftfahrzeugs (16) erstrecken.

14. Vorrichtung zum Verriegeln nach Anspruch 13, **dadurch gekennzeichnet, dass** wenigstens ein Teil der Sende/Empfangsantennen (19a, 19b, 19c, 19d, 19e, 19f), die an dem Kraftfahrzeug befestigt sind, und die insbesondere an der Rückseite des Kraftfahrzeugs befestigt sind, eine Sendeleistung aufweist, die auf einem Pegel gesteuert werden kann, der über einem Pegel der Nennsendeleistung liegt.

15. Vorrichtung nach einem der Ansprüche 9 bis 14, **dadurch gekennzeichnet, dass** die ersten Erfassungsmittel dazu verwendet werden, die Entriegelung des Kraftfahrzeugs im Rahmen eines Zugangs- und Anlass-Systems ohne manuelles Eingreifen automatisch auszuführen, dass die zweiten Erfassungsmittel ein Element einer Sicherheitsvorrichtung des Kraftfahrzeugs bilden, und dass die dritten Erfassungsmittel ein Überwachungselement des Kraftfahrzeugs bilden.

16. Vorrichtung zum automatischen Verriegeln nach Anspruch 15, sofern abhängig von den Ansprüchen 10 bis 14, **dadurch gekennzeichnet, dass** die Mittel zum Prüfen der Nicht-Anwesenheit von Insassen in dem Fahrgastraum des Kraftfahrzeugs ein Element eines Perimeter-Alarms des Kraftfahrzeugs bilden.

## Claims

1. Method for automatic locking of a motor vehicle, comprising a system for access and starting with no manual control, which comprises a first means (1) for detecting the presence of an identifier in a monitored zone at the outer side of the vehicle, and second means for detecting the open or closed state of the motor vehicle doors, and third means for detecting the switched-on or switched-off state of the motor vehicle engine, **characterised in that** the locking of the motor vehicle is automatically controlled when the following conditions are successively detected:
- a motor vehicle door is open,
- the engine is switched off and all the doors of the motor vehicle are closed,
- there is no identifier in the monitored zone at the outer side of the motor vehicle at a time t,
- the identifier is present in the monitored zone at a time t-1 which precedes the time t at which the absence of the identifier was detected.

2. Method according to claim 1, **characterised in that** it is further verified that there is no occupant in the passenger space of the motor vehicle before the presence of the identifier in the monitored zone is verified.

3. Method according to either claim 1 or claim 2,
**characterised in that** the presence of the identifier in the monitored zone (18) is detected by a low-frequency wave being transmitted in at least one coverage zone (18a, 18b, 18c, 18d, 18e, 18f) at the periphery of the motor vehicle from at least one first transmitting and receiving means (17a, 17b, 17c, 17d, 17e, 17f) connected to the motor vehicle, so that the low-frequency wave is received by the identifier which is produced in the form of a second transmitting and receiving means and a return wave is transmitted by the identifier to the first transmitting and receiving means connected to the motor vehicle.

4. Method according to claim 3, **characterised in that** the presence of the identifier is detected by means of transmitting antennae which are distributed over the periphery of the motor vehicle and which are controlled at a nominal transmission power, and that, when no identifier is detected in the monitored zone, at least some of the vehicle antennae (19b, 19d, 19e) located, for example, at the rear of the vehicle, are controlled at a transmission power greater than the nominal transmission power.

5. Method according to claim 4, **characterised in that**, when no identifier is detected in the monitored zone, at least some of the vehicle antennae (19b, 19d, 19e) are controlled at a transmission power of 100% + X% of the nominal power, with X being from 0 to 100 and preferably equal to 30.

6. Method according to any one of claims 3 to 5,
**characterised in that** the low-frequency wave transmitted from the first transmitting and receiving means (17a, 17b, 17c, 17d, 17e, 17f) has a frequency in the order of 125 kHz.

7. Method according to any one of claims 3 to 6,
**characterised in that** the return wave transmitted by the identifier to the first transmitting and receiving means (17a, 17b, 17c, 17d, 17e, 17f) connected to the motor vehicle is a high-frequency wave.

8. Method according to claim 7, **characterised in that** the high-frequency wave transmitted by the identifier has one of the following frequencies: 315, 433, 866 MHz.

9. Device for automatic locking of a motor vehicle, comprising a system for access and starting with no manual intervention, and comprising first means (1) for detecting the presence or absence of an identifier in at least one monitored zone at the outer side of the vehicle, and second means (2) for detecting the open or closed state of the motor vehicle doors, and third means (3) for detecting the switched-on or switched-off state of the motor vehicle engine, **characterised in that** a locking control unit (12) of the motor vehicle is connected electrically, or by means of logical electronic means, to the first means (1) for detecting the presence or absence of an identifier in the monitored zone at the outer side of the vehicle, and to a unit (5) for storing information from the first detection means, and to the second and third detection means in order to automatically control the locking of the motor vehicle, when the following conditions are successively detected:
- a motor vehicle door is open,
- the engine is switched off and all the doors of the motor vehicle are closed,
- there is no identifier in the monitored zone at the outer side of the motor vehicle at a time t,
- the identifier is present in the monitored zone at a time t-1 which precedes the time t at which the absence of the identifier was detected.

10. Locking device according to claim 9, **characterised in that** it further comprises fourth means (4) for verifying whether or not an occupant is in the passenger space of the motor vehicle, which means (4) are operationally connected to the unit (12) for controlling the locking of the motor vehicle so as to allow the automatic locking of the motor vehicle to be activated only when the detection means (4) have allowed verification that there is no occupant inside the passenger space of the motor vehicle.

11. Locking device according to either claim 9 or claim 10, **characterised in that** the first means (1) for detecting the presence or absence of an identifier in at least one monitored zone at the outer side of the vehicle comprise at least one transmitting and receiving antenna (17a, 17b, 17c, 17d, 17e, 17f) which is fixed to the motor vehicle and which is controlled so as to transmit a low-frequency wave in at least one coverage zone at the periphery of the motor vehicle and to detect a return wave originating from the identifier.

12. Locking device according to claim 11, **characterised in that** the transmitting and receiving antenna is controlled so as to transmit a low-frequency wave whose frequency is in the order of 125 kHz.

13. Locking device according to either claim 11 or claim 12, **characterised in that** the first detection means (1) comprise a plurality of transmitting/receiving antennae (17a, 17b, 17c, 17d, 17e, 17f) which are fixed to the motor vehicle (16) so as to transmit waves, in particular at low-frequency, in a plurality of respective coverage zones (18a, 18b, 18c, 18d, 18e, 18f) which extend over the periphery of the motor vehicle (16).

14. Locking device according to claim 13, **characterised in that** at least some of the transmitting/receiving antennae (19a, 19b, 19c, 19d, 19e) which are fixed to the motor vehicle, and in particular fixed at the rear of the motor vehicle, have a transmission power which can be controlled at a level which is greater than a nominal transmission power level.

15. Device according to any one of claims 9 to 14, **characterised in that** the first detection means are used in order to bring about the unlocking of the motor vehicle in an automatic manner in the context of a system for access and starting with no manual intervention, **in that** the second detection means constitute an element of a motor vehicle security device, and **in that** the third detection means constitute an element for monitoring the motor vehicle.

16. Automatic locking device according to claim 15, when dependent on claims 10 to 14, **characterised in that** the means for verifying that there are no occupants in the passenger space of the motor vehicle constitute an element of a perimeter alarm of the motor vehicle.
